**Europäisches Patentamt**

**European Patent Office**

**Office européen des brevets**

(19)

(11) Veröffentlichungsnummer: **0 090 128**
**A1**

## (12) EUROPÄISCHE PATENTANMELDUNG

(21) Anmeldenummer: **83100316.5**

(22) Anmeldetag: **15.01.83**

(51) Int. Cl.³: **C 02 F 3/20**, C 02 F 3/26

---

(30) Priorität: **30.03.82 CH 1937/82**

(43) Veröffentlichungstag der Anmeldung: **05.10.83**
Patentblatt 83/40

(84) Benannte Vertragsstaaten: **BE DE FR GB IT NL**

(71) Anmelder: **GEBRÜDER SULZER AKTIENGESELLSCHAFT**, Zürcherstrasse 9, CH-8401 Winterthur (CH)

(72) Erfinder: **Gros, Henry, Dr.**, Geiselweidstrasse 6/6, CH-8400 Winterthur (CH)

(74) Vertreter: **Dipl.-Ing. H. Marsch Dipl.-Ing. K. Sparing Dipl.-Phys.Dr. W.H. Röhl Patentanwälte**, Rethelstrasse 123, D-4000 Düsseldorf (DE)

---

(54) **Verfahren zur Begasung von bereits mit Gas beladenen Flüssigkeiten und Anlage zur Durchführung des Verfahrens.**

(57) Die Begasung findet unter Druck auf einer gegenüber der Endniveauhöhe (II) abgesenkten Niveauhöhe (III) in einer Begasungskammer (3) statt. In dieser sind mechanische Energieeintragsvorrichtungen (4) für die Verbesserung des Stoffübergangskoeffizienten ($K_L$.a) angeordnet; diese Vorrichtungen (4) bringen das einzutragende Gas aus einem Druckgaspolster (8) in die Flüssigkeit (9) ein.

Die Absenkung der Niveauhöhe (III) macht eine Energiezufuhr für die Erzeugung des notwendigen Überdrucks unnötig; der mechanische Energieeintrag bei der Begasung ermöglicht eine optimale Ausnützung dieser Energie und eine einfache und wirksame Steuerung und Anpassung des Stoffübergangskoeffizienten ($K_L$.a) an schwankende Durchsatzmengen (Q).

EP 0 090 128 A1

P.5709/Wg/Wh

**Gebrüder Sulzer, Aktiengesellschaft, Winterthur / Schweiz**

**Verfahren zur Begasung von bereits mit Gas beladenen
Flüssigkeiten und Anlage zur Durchführung des Verfahrens.**

Die Erfindung betrifft ein Verfahren zur Begasung von bereits mit Gas beladenen Flüssigkeiten, insbesondere zur Sauerstoffanreicherung in luft- bzw. stickstoff-beladenem Wasser oder Abwasser, wobei die Flüssigkeiten nach der Begasung auf einer vorgegebenen Endniveauhöhe weiterverarbeitet werden, und eine Anlage zur Durchführung des Verfahrens.

Wenn eine Flüssigkeit, die bereits ein Gas gelöst enthält, mit einem zweiten Gas bis zur höheren Konzentration des zweiten Gases angereichert werden soll, so wird diese Gasanreicherung bei relativ hohen zu erreichenden Konzentrationen mit Vorteil unter Druck durchgeführt; denn - aufgrund der Gasgesetze - bewirkt die Steigerung der Konzentration des gewünschten Gases durch Einblasen in konzentrierter Form eine Abnahme der Konzentration des bereits gelösten Gases, wenn nicht gleichzeitig der Gesamtdruck erhöht wird. Wenn man höhere Konzentrationen zu erreichen hat, führt dieses "Ausblasen" des gelösten Gases aber zu Verlusten an einzutragendem Gas, da eine erheblich grössere Menge des einzutragenden Gases eingespeist und wieder in verdünnter Form ventiliert werden muss, als tatsächlich
gelöst darin verbleibt.

Es sind daher eine Reihe von Systemen bekannt, in denen
die Begasung unter Druck durchgeführt wird. Ein bekanntes
System besteht z. B. aus einem vertikal aufgestellten
Trichter, den die Flüssigkeit von oben nach unter durchströmt, wobei das einzutragende Gas an der Spitze eingespeist wird (J.P. Torres "Critères de choix d'un procédé
d'oxygénation " - Journée d'étude gas-liquide, Toulouse
12 u. 13. September 1979 - ).

Bei einem zweiten System wird die Flüssigkeit in einem sogenannten Säulenreaktor mit Hilfe einer Pumpe unter einen
Ueberdruck gesetzt, ehe sie in dem Reaktor begast wird;
um einen Teil der Pumpenleistung einzusparen, ist es dabei
möglich, den Säulenreaktor teilweise zu versenken. Den bekannten Systemen ist gemeinsam, dass bei ihnen für die
Druckerhöhung der Flüssigkeit ein relativ erheblicher Energieaufwand notwendig ist.

Weiterhin benötigt das In-Lösung-Gehen des einzutragenden
Gases - d. h. der Uebergang aus der Gas- in die Flüssigphase - bekanntlich eine gewisse Zeit, während der die
Flüssigkeit in der Begasungsvorrichtung verweilen muss.
Neben dem, die Verweilzeit bestimmenden Volumen der Begasungsvorrichtung und dem Konzentrationsgefälle zwischen
Gasphase und Flüssigkeit für das einzutragende Gas ist der
sogenannte Stoffübergangskoeffizient die massgebende Grösse, die die/in Lösung gehende Menge und die "Lösungsgeschwindigkeit" bestimmt. Dieser Stoffübergangskoeffizient ist
bekanntlich eine Apparatekonstante der verwendeten Begasungsvorrichtung; er kann gesteigert werden, wenn in der

0090128

Begasungsvorrichtung der Energieeintrag bzw. -verbrauch gesteigert wird. Diese Energie wird dabei in erster Linie zur Erzeugung oder Aufrechterhaltung von das Lösen des Gases begünstigenden Turbulenzen sowie zur Vergrösserung der Phasengrenzfläche Gas-Flüssigkeit verbraucht.

Bei den genannten, bekannten Systemen wird die für die Turbulenzen benötigte Energie dem Niveau potentieller Energie des in dem System herrschenden Druckes entnommen. Diese Art des Energieeintrags zur Verbesserung des Stoff-übergangs ist nicht optimal; sie erfordert zudem manchmal ein aufwendiges zusätzliches Zwischenpumpen. Stärker ins Gewicht fällt jedoch, dass die mit Vernichtung von hydrostatischem Druck - zur Erhaltung einer genügenden Gaseintragungsturbulenz und Grenzfläche - arbeitenden Systeme stark von der Strömungsgeschwindigkeit abhängig sind und somit nur in relativ engen Bandbreiten von Flüssigkeitsdurchsätzen mit gutem Wirkungsgrad arbeiten. Bei Anlagen mit stark variirenden Durchsätzen erfordern diese Systeme einen grossen Aufwand an Regelungen, durch die darüberhinaus die Störanfälligkeit erhöht wird.

Aufgabe der Erfindung ist es, den Investitions- und Energieaufwand derartiger Anlagen zu verringern und vor allem eine Anlage zu schaffen, bei der relativ stark schwankende Durchsätze ohne komplexe und störanfällige Regeleinrichtungen optimal verarbeitet werden können. Diese Aufgabe wird nach der Erfindung durch ein Verfahren gelöst, bei dem die zu gegasende Flüssigkeit in einem mit der Endniveauhöhe kommunizierenden System auf eine Niveauhöhe geführt wird, die gegenüber der Endniveauhöhe abgesenkt ist, bei dem ferner die Begasung in einer ein gewisses Reaktionsvolumen bildenden Kammer auf der Höhe des abgesenkten Niveaus unter einem Druckgaspolster durchgeführt wird, dessen Druck mindestens dem auf dieser Niveauhöhe lastenden Gesamtdruck der Flüssigkeiten entspricht und bei dem schliesslich der Gaseintrag mindestens zum Teil unter Zufuhr von Energie auf mechanischem Weg in die in der Kammer verweilende Flüssigkeit erfolgt; eine Anlage zur Durchführung des Verfahrens ist dabei gekennzeichnet durch einen U-förmigen Flüssigkeitsbehälter, der gegenüber der Endniveauhöhe der Flüssigkeit vertieft gelegen ist, ferner durch eine im horizontalen Bereich des Behälters angeordnete geschlossene Begasungskammer, in der ein Druckgaspolster vorhanden ist, und schliesslich durch eine mechanische Gaseintragungsvorrichtung in der Begasungskammer.

Die Energiezugabe für die Erzeugung von Turbulenzen und die Vergrösserung der Phasengrenzfläche zwischen Gas- und Flüssigphase erfolgt nach dem erfindungsgemässen Verfahren auf mechanischem Wege, wobei dieser Energieeintrag mit Vorteil durch die in der Flüssigkeit gelöste Konzentration des einzutragenden Gases gesteuert werden kann. Dabei kann die Begasung an die Durchsatzmengen durch die relativ einfache Regulierung der mechanischen Energiequellen - beispielsweise durch drehzahlgesteuerte Antriebsmotoren für die mechanisch arbeitenden Energieeintragsvorrichtungen - oder durch eine Unterteilung der Begasungskammer in mehrere bezüglich der Strömung parallel oder in Reihe angeordnete Einzelkammern mit gemeinsamen Gaspolster, jedoch eigenen, einzeln abschaltbaren Gaseintragsvorrichtungen angepasst werden.

Um Verluste an einzutragendem Gas bei dem Verfahren zu vermeiden, oder zumindest zu minimalisieren, ist es vorteilhaft, wenn die Oberflächenbeschickung für die Flüssigkeit in einer an die Begasungskammer anschliessenden Entgasungszone kleiner 700 m/h gehalten wird. Die Oberflächenbeschickung ist das Verhältnis der Durchsatzmenge zur Grundfläche der an die Begasungskammer anschliessende Entgasungszone; die massgebende Grundfläche ist dabei die horizontale Fläche des Strömungsweges für die Flüssigkeit von der Begasungskammer zu dem zur Endniveauhöhe führenden "Steigrohres" des Systems.

Als mechanische Energieeintragungsvorrichtung haben sich Turbinen-Oberflächenbelüfter bewährt, die gute Eintragsleistungen bei relativer Schaumunempfindlichkeit haben, nicht zu Verstopfungen neigen und von einfacher Bauart sind. Tauchbelüfter als Eintragsvorrichtungen haben gute Eintragsleistungen und sind unempflindlich gegen Verstopfungen und Niveauschwankungen. Als wartungsfreundliche Eintragsvorrichtungen - da sich die Maschinenteile, die gewartet werden müssen, ausserhalb der Begasungskammer befinden können - sind Gebläse mit Blasverteiler anzusehen. Da das von dem Gebläse angesaugte Gas dabei aus der Begasungskammer herausgeführt wird, ist dabei zusätzlich eine einfache Ueberwachung der Gasphasenzusammensetzung möglich. Injektoren oder Strahldüsen-Begaser schliesslich haben ebenfalls den Vorteil, dass die zu wartenden Teile ausserhalb der Kammer angeordnet sein können; darüberhinaus ist bei ihnen das Korrosionsproblem bei sauerstoffreicher Gasphase gering.

Die für die Erzeugung des notwendigen Druckes in der Flüssigkeit benötigte Energie wird bei dem Verfahren praktisch vollständig durch den zwischen der Begasungskammer und der Endniveauhöhe vorhandenen Niveauunterschied aufgebracht, erfordert also keine zusätzliche Energiequelle. Reibungs- und sonstige Strömungsverluste in der Flüssigkeit lassen sich dabei auf einfache Weise kompensieren, wenn die Einlaufniveauhöhe des kommunizierenden Systems gegenüber der Endniveauhöhe entsprechend dem Druckverlust der Flüssigkeit beim Durchströmen des Systems erhöht wird; dies lässt sich am einfachsten erreichen, indem man das Einlaufniveau des U-förmigen Behälters gegenüber der Endniveauhöhe der Flüssigkeit im Auslauf überhöht. Gegebenenfalls kann es vorteilhaft sein, mindestens einen Teil des einzutragenden Gases in die Abwärtsströmung des kommunizierenden Systems einzuspeisen.

Die für die Aufrechterhaltung eines einsprechenden Druckgaspolsters notwendige Zugabe an einzutragendem Gas in die Begasungskammer lässt sich auf einfache Weise in Abhängigkeit von der Flüssigkeitssäule der in der Kammer verweilenden Flüssigkeit steuern.

Das vorliegende Verfahren und die zugehörige Anlage können mit Vorteil angewendet werden: Bei Systemen, in denen eine Flüssigkeit mit Gas angereichert werden muss, z. B. bei einer Sauerstoff-Anreicherung von tiefen Seeschichten; weiterhin bei Systemen, in denen die mit Gas angereicherte Flüssigkeit in ein Reaktionssystem geführt wird (z. B. in einen Festbett-Reaktor mit Katalysator bzw. Biokatalysator), in welchem eine direkte Begasung ungünstig ist. Dies ist z. B. der Fall bei der aeroben Biofiltration - bei geforderten hohen Schwebestoffeliminationen oder speziellen, z. B. Flockungs-, Vorgängen im Biofiltrationsfestbett - oder bei der autotrophen Denitrifikation mit Wasserstoff-Oxidanten. Ein weiteres Anwendungsgebiet sind Systeme, in denen eine Oxidation - beispielsweise mit Reinsauerstoff,

Ozon oder Chlor - durchgeführt werden soll. In Systemen, in denen Reaktionen ablaufen sollen, ist es dabei möglich, die angestrebte Reaktion oder mindestens einen Teil davon bereits in der Begasungskammer ablaufen zu lassen.

Im folgenden wird die Erfindung anhand von Ausführungsbeispielen im Zusammenhang mit der Zeichnung näher erläutert.

Fig. 1    gibt schematisch ein erstes Ausführungsbeispiel einer Anlage zur Durchführung des Verfahrens wieder;

Fig. 2    zeigt ein zweites Beispiel einer Anlage, mit einer in mehrere Einzelkammern unterteilten Begasungskammer.

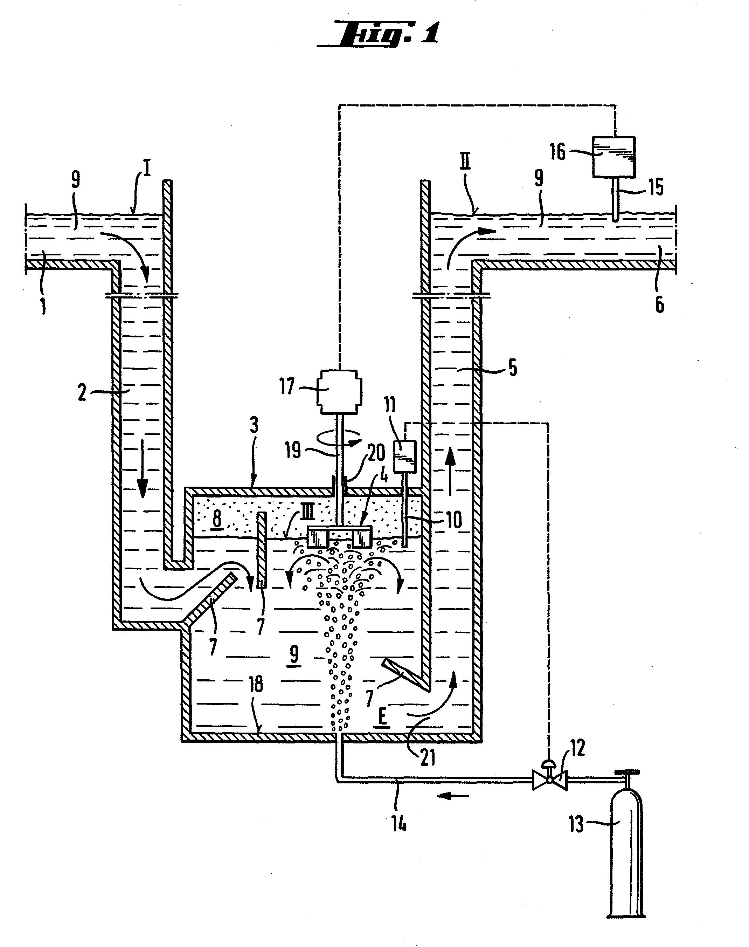

Die Anlage nach Fig. 1 enthält einen Zulauf 1 für die bereits mit Gas beladene Flüssigkeit, z. B. für ein mit Luft gesättigtes Abwasser, dessen Oberfläche mit der freien Atmosphäre in Verbindung steht. Die Niveauhöhe des Zulaufs 1, also die Einlaufniveauhöhe, sei mit I bezeichnet. Dieses Abwasser soll auf einer Niveauhöhe II, die durch einen Ablauf 6 gegeben ist, nach seiner Begasung mit Sauerstoff ($O_2$) einer weiteren Behandlung, z. B. einer Biofiltration, zugeführt werden.

Vom Zulauf 1 führt ein Fallschacht 2 auf eine tiefer gelegene Niveauhöhe III, die beispielsweise um 5 - 10 m abgesenkt ist, wobei die optimale Tiefe der Absenkung sich im Einzelfall aus wirtschaftlichen Ueberlegungen ergibt. Der Fallschacht 2 mündet in eine Begasungskammer 3, in der die Niveauhöhe III mit Hilfe eines Gaspolsters 8 gehalten wird. In dieses Gaspolster 8 wird Sauerstoff ($O_2$) über eine mit einem Durchflusssteuerorgan 12 versehene Leitung 14 aus einer Druckgasflasche 13 eingespeist, wobei die Einspeisung durch den Boden 18 der Begasungskammer 3 erfolgt; selbstverständlich ist es auch möglich, das Gas durch eine Seitenwand oder die Decke der Kammer 3 einzuspeisen. Das Gaspolster 8 enthält neben Sauerstoff auch noch Stickstoff ($N_2$); dieser Stickstoff tritt durch Entgasung des Abwassers beim Anfahren der Anlage in das Gaspolster ein. Im stationären Zustand bleibt sein Anteil – entsprechend dem Stickstoffpartialdruck in der Atmosphäre von 0,8 bar – etwa konstant.

Der Steuerung der Niveauhöhe III in der Kammer 3 dient eine Niveau-Mess-Sonde 10, die über einen Niveau-Regler 11 das Steuerorgan 12 in der Leitung 14 steuert. Dieses kann dabei ein absperrbares Regelorgan oder auch ein Auf-Zu-Absperrventil sein.

Der Gaseintrag aus dem Gaspolster 8 in das in der Kammer 3 verweilende Wasser erfolgt mit Hilfe eines Turbinen-Oberflächenbelüfters 4, der über eine bei 20 gasdicht durch den Deckel der Kammer 3 geführte Welle 19 von einem Motor 17 angetrieben ist. Dieser Motor 17 ist beispielsweise drehzahlgeregelt; die Regulierung seiner Drehzahl erfolgt dabei von einem Regler 16 aus, in dem die Signale einer Mess-Sonde 15 zugeführt werden. Diese misst die im Ablauf 6 vorhandene Sauerstoffmenge pro Volumeneinheit. Es ist jedoch auch möglich, die Sonde 15 an einer anderen geeigneten Stelle der nachfolgenden Behandlungsstufe anzuordnen; beispielsweise kann für die Regelung der Motordrehzahl auch die Sauerstoffkonzentration im aus dem Biofilter ablaufenden Reinwasser herangezogen werden.

Die Begasungskammer 3, in der Trenn- und Prallwände 7 für die Führung der ein- und ausströmenden Flüssigkeit vorgesehen sind, ist mit dem Ablauf 6 über einen Steigschacht 5 verbunden.

Der untere Teil der Begasungskammer 3 bildet eine Entgasungszone E, in der die durch die mechanische Einrichtung erzeugten, und sich nicht vollständig auflösenden Gasblasen aufsteigen und in das Gaspolster 8 zurückfliessen können, ehe das Wasser den Steigschacht 5 erreicht.

Sollen Verluste an einzutragendem Gas – weil dieses beispielsweise relativ kostbar ist – vermieden werden, so muss die "Verweilzeit" der Flüssigkeit in der Entgasungszone E ausreichen, um alle Gasblasen innerhalb dieser Zone aufsteigen zu lassen. Aus diesem Grunde ist es vorteilhaft, wenn die Oberflächenbeschickung der Begasungskammer 3 kleiner als 700 m/h ist. Diese Oberflächenbeschickung ist das Verhältnis der Durchsatzmenge (in m$^3$/h) zur Grundfläche der Entgasungszone E; dabei ist diese Grundfläche gegeben durch den Teil der Bodenfläche der Begasungskammer 3, der bezüglich der Strömung der Flüssigkeit vor der Austrittsöffnung 21 in den Steigschacht 5 liegt.

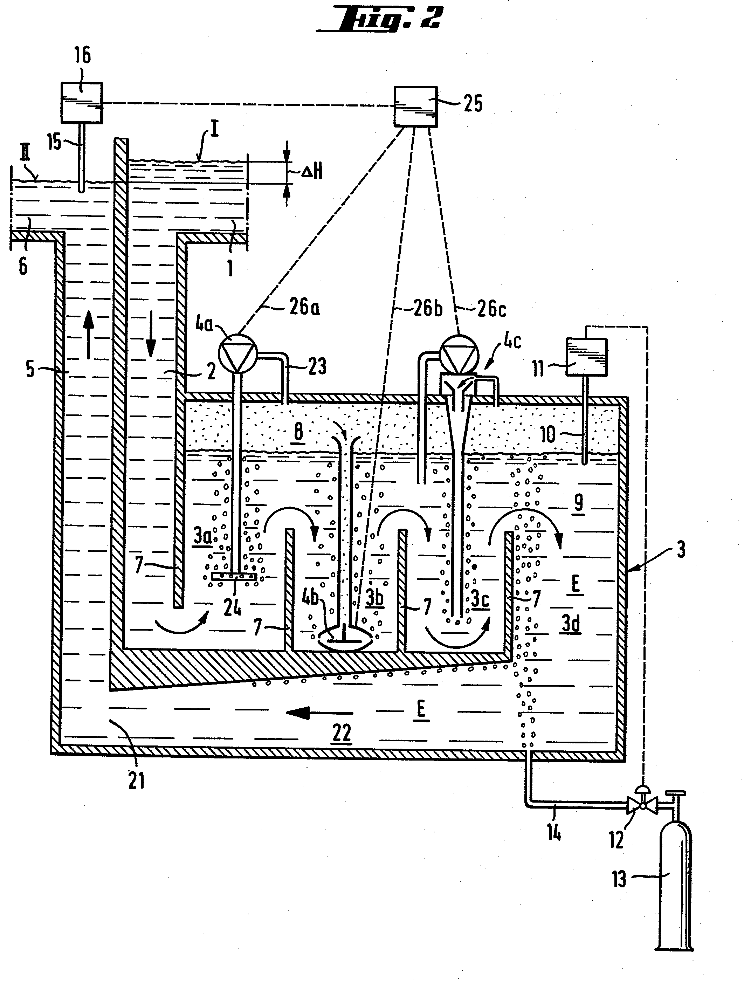

Bei der Anlage nach Fig. 2 liegt die Einlaufniveauhöhe I des Zulaufs 1 um eine Höhe $\Delta$ H über der Endniveauhöhe II. Dieser Niveau- oder Energieunterschied dient dazu, die in der Anlage durch Reibung und Umlenkungen entstehende Strömungsverluste zu decken.

Weiterhin ist das Volumen der Begasungskammer 3 durch Trennwände 7 in mehrere Einzelkammern 3a, 3b, 3c und 3d unterteilt, in denen unterschiedliche Begasungsvorrichtungen

0090128

4a - 4c vorgesehen sind. Die letzte Einzel- oder Teilkammer 3d bildet dabei bereits einen Teil der Entgasungszone E, die sich in einem horizontalen Teil 22 fortsetzt. Um bei der Anlage nach Fig. 2 eine Rückführung des überschüssigen Sauerstoffs in das Gaspolster 8 zu erleichtern, ist die Decke des horizontalen Teils 22 der Entgasungszone E gegen die Strömungsrichtung des Wassers, die durch Pfeile angedeutet ist, ansteigend ausgebildet. Für die Bestimmung der Oberflächenbeschickung wird in der Anlage nach Fig. 2 die Grundfläche der Teilkammer 3d und diejenige des horizontalen Teils 22 - wiederum bis zur Austrittsöffnung 21 - berücksichtigt.

Als Begasungsvorrichtung ist in der Einzelkammer 3a ein Gebläse 4a vorgesehen, das aus dem Gaspolster 8 über eine Leitung 23 Gas ansaugt und in einen Blasenverteiler 24 fördert. Die Einzelkammer 3b enthält als Begasungsvorrichtung einen Tauchbelüfter 4b, während ein Strahldüsen-Begaser 4c den Gaseintritt in Kammer 3c bewirkt.

Der Gesamteintrag der durch diese Vorrichtung 4a - 4c mechanisch eingetragenen Energie wird durch Ein- oder Ausschalten der nicht dargestellten Antriebe für die verschiedenen Vorrichtungen 4a - 4c geregelt, wobei wiederum eine Mess-Sonde 15 für die Sauerstoffkonzentration am Ende des Steigschachtes 5 über einen Regler 16 ein Schaltgerät 25 betätigt, mit dem über die gestrichelt angedeuteten Signalleitungen 26a - 26c die nicht dargestellten Antriebe betätigt werden.

Im folgenden sei noch ein Anwendungsbeispiel der Erfindung beschrieben:

Für die aerobe Biofiltration seien am Eingang eines nicht dargestellten Biofilters, zu dem beispielsweise der Ablauf 6 führt, zwecks Deckung des Sauerstoff-($O_2$)-Verbrauchs im Biofilter höhere $O_2$-Konzentrationen notwendig. Eine Besaugung mit Luft bei Atmosphärendruck würde nur Konzentrationen von 6 - 10 g $O_2/m^2$ ergeben. Deshalb ist bei grosser $O_2$-Zehrung im Biofilter eine $O_2$-Voranreicherung unentbehrlich. Um bei $O_2$-Eintrag gute $O_2$-Ausnützung zu erhalten, wird gemäss der Erfindung eine $O_2$-Begasung unter Druck angewendet; dabei entweicht auch wenn das Wasser nach der Begasung nicht mehr unter Ueberdruck steht, nur wenig $O_2$, sofern man eine $O_2$-Konzentration im Wasser aufrechterhält, bei der der entsprechende $O_2$-Partialdruck kleiner 1 bar ist.

Der $O_2$-Eintrag unter Druck bei abgesenkter Niveauhöhe ist daher die optimale Lösung zur Erreichung der gewünschten $O_2$-Eingangskonzentrationen von 15 - 40 g $O_2/m^3$ im Biofilter. Das Wasser, das bei Atmosphärendruck mit 3 - 8 g $O_2/m^3$ und gesättigt mit Stickstoff ($N_2$) - d. h. mit etwa 16 g $N_2/m^3$ - im Zulaufkanal 1 anfällt, fliesst im Schacht 2 zur Begasungskammer 3. Die Niveauhöhe III der Flüssigkeit in der Kammer liegt etwa 10 m unter der Einlaufniveauhöhe I im Zulaufkanal 1, so dass man in der Kammer 3 einen Gasdruck von etwa 2 bar erhält. Der $N_2$-Partialdruck im Gaspolster 8 ist - nach einer Anlaufzeit, während der Stickstoff aus dem Abwasser in das Gaspolster 8 austritt - etwa im Gleichgewicht mit der Flüssigphase; er beträgt daher etwa 0,8 bar. Somit ist der $O_2$-Partialdruck im Gaspolster 8 etwa 1,2 bar, auch wenn reiner Sauerstoff über die Leitung 14 in die Kammer 3 eingeblasen wird. Dies entspricht einer mittleren $O_2$-Gleichgewichtskonzentration an der Phasengrenzfläche von etwa 60 g $O_2/m^3$. Sollen $O_2$-Konzentrationen von etwa 30 g $O_2/m^3$ am Ausgang der

Kammer 3 - also beispielsweise an der Mess-Stelle der Sonde 15 - erreicht werden, so ergibt sich also ein Konzentrationsgefälle von ebenfalls etwa 30 g $O_2/m^3$. Dieses Konzentrationsgefälle wird im Mittel noch erhöht, wenn in der Kammer 3 die Flüssigkeit eine gewisse Höhe, beispielsweise 1,5 - 6 m aufweist, da dann im unteren Teil der Flüssigkeit infolge des erhöhten hydrostatischen Druckes die Gleichgewichtskonzentration nochmals um bis zu ca. 30 g $O_2/m^3$ erhöht ist.

Bei gegebenem Volumen V der Begasungskammer 3 ist die $O_2$-Konzentration im die Kammer 3 verlassenden Wasser proportional dem Konzentrationsgefälle - als treibender Kraft -, der Verweilzeit T und dem Stoffübergangskoeffizient $K_L \cdot a$, wobei die Verweilzeit T der Quotient aus dem Kammervolumen V und der Durchsatzmenge Q ist. Bei kleinen Durchsätzen Q wird somit die Verweilzeit T ansteigen, so dass der Stoffübergangskoeffizient $K_L a$ kleiner werden kann. Der spezifische Energieeintrag in die Kammer 3 kann dann verkleinert werden.

Werte von $K_L \cdot a$, die bei T von etwa 2 min und dem erwähnten Konzentrationsgefälle von 30 g $O_2/m^3$ für einen guten Stoffübergang erreicht werden müssen, betragen ungefähr 10 - 30 $(h^{-1})$. Dafür ist es notwendig, in der Kammer 3 - im wesentlichen unabhängig von der gewählten Energieeintragsvorrichtung 4 - eine Leistung von 50 - 150 $Wh/m^3$ aufzubringen.

Bei einer Verringerung des Durchsatzes Q um einen Faktor, beispielsweise von 5 - 10, kann der Energieeintrag um den gleichen Faktor reduziert werden. Es ist dann möglich, von den in Reihe angeordneten Energieeintragungsvorrichtungen 4a - 4c eine oder zwei abzuschalten bzw. ihre

0090128

Leistung, beispielsweise über drehzahlgesteuerte Antriebsmotoren, zu reduzieren. Diese Abschaltung oder Reduzierung
kann in Abhängigkeit des Durchsatzes Q erfolgen; bei den
gezeigten Anlagen dienen dazu jedoch die Mess-Signale der
die $O_2$-Konzentration im Ablaufkanal 6 messenden Sonde 15,
die jedoch auch am Ende der Begasungskammer 3 und/oder vor
und nach den Bioreaktoren angeordnet sein kann.

Die Einspeisung von frischem Sauerstoff erfolgt über die
Leitung 14; diese kann - statt im Boden 18 - auch im Fallschacht 2 angeordnet sein, wenn die Geschwindigkeit der
fallenden Flüssigkeit grösser ist als die Steiggeschwindigkeit der Gasblasen.

Zur Steuerung der $O_2$-Einspeisung erfasst die Niveaumess-
Sonde 10 Ansteigen oder Absinken der Grenzfläche zwischen
dem Gaspolster 8 und der Flüssigkeit 9. Eine Erhöhung des
Pegels erfolgt, wenn sich eine gewisse Menge $O_2$ in der
Flüssigkeit 9 aufgelöst hat. Dann wird über die Regeleinheit 11 das Durchflussregelorgan oder Ventil 12 geöffnet.
Das Gas, das sich in der Druckgasflasche 13 mit einem Druck
befindet, der nur wenig über dem Druck in der Leitung 14
liegt, strömt in die Kammer 3 ein und vergrössert das Gaspolster 8, bis die Grenzfläche wieder so tief ist, dass
das Ventil 12 wieder geschlossen wird. Die Strömungsgeschwindigkeit und der Vordruck des $O_2$ in der Flasche 13
können so eingestellt werden, dass die Grenzflächen- oder
Pegelschwankungen klein  gehalten werden.

Die an die Begasungskammer 3 anschliessende Entgasungszone
E wird wie bereits erwähnt, vorteilhafterweise so dimensioniert, dass keine ungelösten Gasblasen in den Steigschacht 5 und in den Ablaufkanal 6 mitgerissen werden. Wie
ebenfalls bereits erwähnt, wird dazu die Oberflächenbe-

- 14 -

0090128

schickung kleiner 700 m/h gehalten. Diese Massnahme gewährleistet eine praktisch 100 %-ige Ausnutzung des zugeführten Sauerstoffes.

Patentansprüche

1. Verfahren zur Begasung von bereits mit Gas beladenen Flüssigkeiten insbesondere zur Sauerstoffanreicherung in luftbeladenem Wasser oder Abwasser, wobei die Flüssigkeiten nach der Begasung auf einer vorgegebenen Endniveauhöhe weiterbearbeitet werden, dadurch   g e k e n n z e i c h - n e t , dass die zu begasende Flüssigkeit in einem mit der Endniveauhöhe (II) kommunizierenden System (2, 3, 5) auf eine Niveauhöhe (III) geführt wird, die gegenüber der Endniveauhöhe (II) abgesenkt ist, dass ferner die Begasung in einer ein gewisses Reaktionsvolumen bildenden Kammer (3) auf der Höhe des abgesenkten Niveaus (III) unter einem Druckgaspolster (8) durchgeführt wird, dessen Druck mindestens dem auf dieser Niveauhöhe (III) lastenden Gesamtdruck der Flüssigkeiten entspricht, und dass schliesslich der Gaseintrag mindestens mindestens zum Teil unter Zufuhr von Energie auf mechanischem Weg (4, 4a - 4c) in die in der Kammer (3) verweilende Flüssigkeit erfolgt.

2. Verfahren nach Anspruch 1, dadurch gekennzeichnet, dass mindestens ein Teil des einzutragenden Gases in die Abwärtsströmung (2) des kommunizierenden Systems (2, 3, 5) eingespeist wird.

3. Verfahren nach Anspruch 1, dadurch gekennzeichnet, dass die Einlaufniveauhöhe (I) des kommunizierenden Systems (2, 3, 5) gegenüber der Endniveauhöhe (II) entsprechend dem Druckverlust der Flüssigkeit beim Durchströmen des Systems (2, 3, 5) erhöht wird.

4. Verfahren nach Anspruch 1, dadurch gekennzeichnet, dass die Zugabe an einzutragendem Gas zu dem Druckgaspolster (8) in Abhängigkeit von der Flüssigkeitsäule der in der Kammer (3) verweilenden Flüssigkeit gesteuert wird.

5. Verfahren nach Anspruch 1, dadurch gekennzeichnet, dass der Energieeintrag auf mechanischem Wege (4, 4a - 4c) durch die in der Flüssigkeit gelöste Konzentration des einzutragenden Gases gesteuert wird.

6. Verfahren nach Anspruch 1, dadurch gekennzeichnet, dass die Oberflächenbeschickung für die Flüssigkeit in einer an die Begasungskammer (3) anschliessenden Entgasungszone (E) $\leqslant$ 700 m/h gehalten wird.

7. Anlage zur Durchführung des Verfahrens nach Anspruch 1, gekennzeichnet durch einen U-förmigen Flüssigkeitsbehälter (2, 3, 5), der gegenüber der Endniveauhöhe (II) der Flüssigkeit vertieft gelegen ist, ferner durch eine im horizontalen Bereich des Behälters angeordnete geschlossene Begasungskammer (3), in der ein Druckgaspolster (8) vorhanden ist, und schliesslich durch eine mechanische Gaseintragsvorrichtung (4, 4a - 4c) in der Begasungskammer (3).

8. Anlage nach Anspruch 7, dadurch gekennzeichnet, dass das Einlaufniveau (I) des U-förmigen Behälters (2, 3, 5) gegenüber der Endniveauhöhe (II) der Flüssigkeit in seinem Auslauf (6) überhöht ist.

9. Anlage nach Anspruch 7, dadurch gekennzeichnet, dass die Gaseintragsvorrichtung ein Turbinen-Oberflächenbelüfter (4) ist.

10. Anlage nach Anspruch 7, dadurch gekennzeichnet, dass die Gaseintragsvorrichtung ein Tauchbegaser (4b) ist.

11. Anlage nach Anspruch 7, dadurch gekennzeichnet, dass die Gaseintragsvorrichtung ein Gebläse (4a) ist, an das ein in die Flüssigkeit eintauchender Blasenverteiler (24) angeschlossen ist.

12. Anlage nach Anspruch 7, dadurch gekennzeichnet, dass die Gaseintragsvorrichtung ein Strahldüsen-Begaser (4c) ist.

13. Anlage nach Anspruch 7, dadurch gekennzeichnet, dass die Begasungskammer (3) durch Zwischenwände (7) mit Ueberlaufkanten in mehrere bezüglich der Strömung parallel und/oder in Reihe zueinander angeordneten Einzelkammern (3a - 3c) unterteilt ist, über denen ein gemeinsames Gaspolster (8) lagert, die jedoch eigene Gaseintragsvorrichtungen (4a - 4c) haben, die ihrerseits einzeln ein- und ausschaltbar sind.

# Fig. 1

0090128

**Fig. 2**

Europäisches
Patentamt

**EUROPÄISCHER RECHERCHENBERICHT**

0090128

Nummer der Anmeldung

EP 83 10 0316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 216 917 (R. SCHREIBER) <br><br> * Seite 1, erster Absatz; Seite 5, zweiter Absatz - Seite 7, erster Absatz; Seite 11, Anspruch 2 * | 1,5,7, 13 | C 02 F 3/20 <br> C 02 F 3/26 |
| | --- | | |
| X | EP-A-0 008 856 (DORR-OLIVER) <br> * Titelseite, Zusammenfassung; Seite 9, Zeilen 3-36 * | 1,2 | |
| | --- | | |
| A | US-A-3 547 811 (UNION CARBIDE) <br> * Figuren 1-3 * | 5,9-11 | |
| | --- | | |
| A | DE-A-2 926 441 (LINDE) <br> * Anspruch 1 * | 5 | |
| | --- | | **RECHERCHIERTE SACHGEBIETE (Int. Cl. ³)** |
| A | DE-A-2 232 514 (MESSERSCHMITT) <br> * Figur 1 * | 7 | |
| | --- | | C 02 F |
| A | US-A-3 503 593 (BIRD MACHINE) | | |
| | ----- | | |

Der vorliegende Recherchenbericht wurde für alle Patentansprüche erstellt.

| Recherchenort <br> DEN HAAG | Abschlußdatum der Recherche <br> 01-07-1983 | Prüfer <br> TEPLY J. |
|---|---|---|